# EUROPÄISCHE PATENTANMELDUNG

(11) **EP 1 189 415 A2**
(43) Veröffentlichungstag der Anmeldung: **20.03.2002**
(21) Anmeldenummer: 01119544.3
(22) Anmeldetag: 14.08.2001
(51) Int. Cl.: H04M 3/42

(54) **Verfahren und Anordnung zum Verifizieren einer Verbindung zwischen einer einen Zugriff auf eine Kommunikationseinrichtung durchführenden Applikation und einer den Zugriff steuernden Einrichtung**

(30) Priorität: 14.09.2000 DE 10045558
(71) Anmelder: SIEMENS AKTIENGESELLSCHAFT, 80333 München (DE)
(72) Erfinder: Ehrlich, Michael, 45663 Recklinghausen (DE); Schröter, Otto, 45307 Essen (DE)

(57) **Zusammenfassung**

Erfindungsgemäß werden zwischen der Applikation (APP) und der Einrichtung (SE) Aufrechterhaltungsmeldungen (SAC) ausgetauscht. In Fällen, in denen nach Ablauf einer vorgebbaren Zeitspanne keine Aufrechterhaltungsmeldung (SAC) von der Applikation (APP) und/oder der Einrichtung (SE) empfangen wurden, wird eine konfigurierbare Fehlerbehandlung eingeleitet. Die Fehlerbehandlung umfaßt beispielsweise eine Beendigung der Verbindung zwischen der Applikation (APP) und der Kommunikationseinrichtung (PBX), ein Neustart der Applikation (APP) und eine Benachrichtigung über den Ausfall, bzw. die Fehlfunktion der Applikation (APP).

## Beschreibung

Verfahren und Anordnung zum Verifizieren einer Verbindung zwischen einer einen Zugriff auf eine Kommunikationseinrichtung durchführenden Applikation und einer den Zugriff steuernden Einrichtung

Die Erfindung betrifft insbesondere ein Verfahren und eine Anordnung zum Verifizieren einer Verbindung zwischen einer sogenannten 'TAPI-Applikation' (Telephony Application Programming Interface) und einem sogenannten 'TAPI Service Provider'.

Eine Steuerung einer Datenübermittlung ausgehend von einer auf einer Windows-basierten Datenverarbeitungseinrichtung - z.B. einem Personal Computer - ablaufenden Applikation über ein Kommunikationsnetz - beispielsweise über ein ISDN-Netz oder ein Mobilfunknetz - erfolgt im allgemeinen mittels eines in der Datenverarbeitung integrierten sogenannten TAPI-Treibers (Telephony Application Programming Interface). TAPI stellt dabei eine Softwareschnittstelle dar, die einen Zugriff ausgehend von auf einer Windows-basierten Datenverarbeitungseinrichtung ablaufenden Applikationen auf eine den Anschluß an ein Kommunikationsnetz realisierenden Anschlußeinheit der Datenverarbeitungseinrichtung erlaubt. Hierfür ist für die TAPI-Schnittstelle ein standardisierter Satz von Befehlen definiert.

Bei einer sogenannten 'Client-Server-Architektur' verfügen die einzelnen als 'Clients' bezeichneten Datenverarbeitungseinrichtungen über keinen direkten Anschluß an eine Kommunikationsanlage bzw. an das Kommunikationsnetz. Der Anschluß an die Kommunikationsanlage bzw. das Kommunikationsnetz, erfolgt durch eine als 'Server' bezeichnete zentrale Einrichtung, die beispielsweise über ein lokales Netzwerk LAN (Lokal Area Network) mit den Datenverarbeitungseinrichtungen verbunden ist.

Eine derartige zentrale Einrichtung wird in der Literatur häufig als 'TAPI Service Provider', kurz TSP, bezeichnet.

Für eine Datenübermittlung mit der Kommunikationsanlage, bzw. über das Kommunikationsnetz ausgehend von einer auf der Datenverarbeitungseinrichtung laufenden Applikation werden die von der Applikation ausgegebenen Befehle und die zu übermittelnden Daten über die TAPI-Schnittstelle der Datenverarbeitungseinrichtung, das lokale Netzwerk LAN und die TAPI-Schnittstelle der zentralen Einrichtung an die zentrale Einrichtung übermittelt, welche eine applikations-individuelle Verbindung mit der Kommunikationsanlage, bzw. über das Kommunikationsnetz einrichtet.

In Abhängigkeit der Art einer Applikation werden dabei durch die Applikation kommunikationsanlagen-spezifische Funktionen, wie beispielsweise eine Gebührenerfassung, Telefonbuch-Funktionen oder ACD-Funktionen (Automatic Call Distribution) realisiert. Bei der Realisierung einiger dieser kommunikationsanlagen-spezifischen Funktionen, z.B. bei einer Realisierung von ACD-Funktionen, stehen die jeweilige Applikation und die Kommunikationsanlage in einer permanenten Wechselbeziehung miteinander, d.h. es erfolgt permanent ein bidirektionaler Informationsaustausch zwischen der Applikation und der Kommunikationsanlage über die zentrale Einrichtung (TAPI Service Provider).

Kommt es dabei zu einer Fehlfunktion der Applikation oder stürzt die Applikation im Extremfall ab, wird der bidirektionale Informationsaustausch durch die Applikation außerplanmäßig unterbrochen. Die zentrale Einrichtung (TAPI Service Provider) verfügt über keine Sicherungseinrichtung, die eine derartige Fehlfunktion oder Absturz der Applikation erkennt und wartet weiterhin auf Meldungen von der Applikation. Aufgrund der nicht erkannten Fehlfunktion bzw. des Absturzes der Applikation kommt es somit auch zu Fehlfunktionen des 'TAPI Service Providers' bzw. der Kommunikationsanlage, so daß eine Richtigkeit von nachfolgenden Aktionen oder von gewonnenen Daten nicht gewährleistet werden kann.

Der vorliegenden Erfindung liegt daher die Aufgabe zugrunde, Maßnahmen vorzusehen, durch die eine Fehlfunktion bzw. ein Absturz einer Applikation erkannt und geeignete Maßnahmen ergriffen werden können.

Die Lösung dieser Aufgabe erfolgt erfindungsgemäß mit den Merkmalen des Patentanspruchs 1 bzw. 9.

Ein wesentlicher Vorteil des erfindungsgemäßen Verfahrens besteht darin, daß das Verfahren auf einfache Weise in bereits bestehende Systeme integriert werden kann.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch die Möglichkeit einer individuellen Konfiguration einer zentralen Einheit eine Reaktion nach einer Fehlfunktion - beispielsweise eines Absturzes - einer Applikation nach Belieben eingerichtet werden kann.

Ein weiterer Vorteil von in den Unteransprüchen definierten Ausgestaltungen der Erfindung besteht darin, daß durch die Verwendung einer TAPI-Schnittstelle (Telephony Application Programming Interface) für eine Kommunikation zwischen einer auf einer Datenverarbeitungseinrichtung ablaufenden Applikation und der Kommunikationseinrichtung Datenverarbeitungseinrichtungen mit dem weit verbreiteten Betriebssystem "Windows" der Firma Mircrosoft verwendet werden können.

Ein Ausführungsbeispiel der Erfindung wird im folgenden anhand der Zeichnung näher erläutert.

Dabei zeigen:
- Fig. 1:: ein Strukturbild zur schematischen Darstellung der am erfindungsgemäßen Verfahren beteiligten wesentlichen Funktionseinheiten; und
- Fig. 2:: ein Windows-Fenster mittels dem eine Konfigurierung der bei einer Fehlfunktion einer Applikation vorzunehmenden Fehlerbehandlung ermöglicht wird.

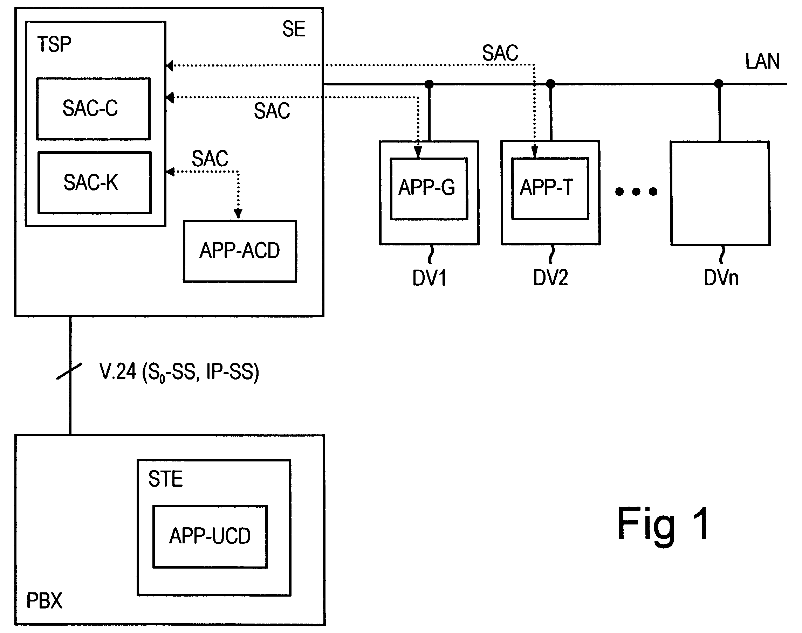

Fig. 1 zeigt eine Servereinrichtung SE und mehrere Datenverarbeitungseinrichtungen DV1,...,DVn - in der Literatur in diesem Zusammenhang häufig als 'Clients' bezeichnet - die über ein lokales Netzwerk LAN (Local Area Network) miteinander verbunden sind. Eine Datenübermittlung über das lokale Netzwerk LAN erfolgt gemäß dem bekannten IP-Protokoll (Internet Protocol). Des weiteren ist die Servereinrichtung SE über eine V.24-Schnittstelle mit einer Kommunikationsanlage PBX verbunden. Alternativ kann ein Anschluß der Servereinrichtung SE an die Kommunikationsanlage PBX auch über eine ISDN-orientierte Schnittstelle - beispielsweise eine S₀-Schnittstelle - oder eine IP-orientierte Schnittstelle erfolgen (durch das in Klammern gesetzte S₀-SS und IP-SS angedeutet).

Sowohl auf den Datenverarbeitungseinrichtungen DV1,..., DVn als auch auf der Servereinrichtung SE laufen unter dem Betriebssystem "Windows" der Firma Mircosoft Applikationen APP ab, durch die ein Zugriff auf die Kommunikationsanlage PBX erfolgt. Ein Zugriff der Applikationen APP auf die Kommunikationsanlage PBX erfolgt dabei über eine jeweils in der Servereinrichtung SE und den Datenverarbeitungseinrichtungen DV1,...,DVn implementierte sogenannte TAPI-Schnittstelle. Beispielhaft laufen auf einer ersten Datenverarbeitungseinrichtung DV1 eine Applikation APP-G zur Gebührenerfassung und auf einer zweiten Datenverarbeitungseinrichtung DV2 eine Telefonbuch-Applikation APP-T für einen automatischen Verbindungsaufbau über die Kommunikationsanlage PBX ausgehend von einer mittels der Applikation APP-T ausgewählten Rufnummerninformation ab. Auf der Servereinrichtung SE läuft eine Applikation APP-ACD für eine automatische Anrufverteilung (ACD: Automatic Call Distribution) ab, durch die eine Steuerung der Verteilung von an der Kommunikationsanlage PBX ankommenden Rufen erfolgt. Des weiteren ist in einer Steuereinheit STE der Kommunikationsanlage PBX ebenfalls eine Applikation APP-UCD (UCD: Universal Call Distribution) für eine Anrufverteilung der an der Kommunikationsanlage PBX ankommenden Rufe implementiert, wobei die Applikation APP-UCD nur in den Fällen aktiviert wird, in denen die in der Servereinrichtung SE implementierte Applikation APP-ACD für eine automatische Anrufverteilung deaktiviert wird bzw. ausfällt.

Eine Steuerung des Datenaustausches zwischen der Kommunikationsanlage PBX und den jeweiligen Applikationen APP-ACD, APP-G, APP-T wird dabei durch eine auf der Servereinrichtung laufende zentrale Einheit TSP - in der Literatur häufig als 'TAPI Service Provider' bezeichnet - realisiert. Eine bidirektionale Datenübermittlung zwischen der zentralen Einheit TSP und der Kommunikationsanlage PBX erfolgt beispielhaft gemäß dem CSTA-Protokoll (Computer Supported Telecommunications Application). Eine bidirektionale Datenübermittlung zwischen der zentralen Einheit TSP und den Applikationen APP-ACD, APP-G, APP-T erfolgt unter Zugriff auf - nicht dargestellte-TAPI-Bibliothek-Funktionen - in der Literatur häfig als 'Dynamik Link Library', kurz DLL, bezeichnet.

Die zentrale Einheit TSP umfaßt im wesentlichen eine Kontrolleinheit SAC-C und eine Konfigurierungseinheit SAC-K. Durch die Kontrolleinheit SAC-C werden zum einen in einstellbaren Zeitintervallen Aufrechterhaltungsmeldungen SAC (Still Alive Control" an die auf der Servereinrichtung SE und den Datenverarbeitungseinrichtungen DV1,...,DVn ablaufenden Applikationen APP-ACD, APP-G, APP-T gesendet. Zum anderen überprüft die Kontrolleinheit SAC-C, ob innerhalb der Zeitintervalle Aufrechterhaltungsmeldung SAC von den Applikationen APP-ACD, APP-G, APP-T zurück an die zentralen Einheit TSP übermittelt werden. Werden innerhalb dieses Zeitintervalls keine Aufrechterhaltungsmeldungen SAC von den aktuell ablaufenden Applikationen APP-ACD, APP-G, APP-T empfangen, wird davon ausgegangen, daß bei der Abarbeitung der Applikation APP-ACD, APP-G, APP-T ein Fehler aufgetreten bzw. die jeweilige Applikation APP-ACD, APP-G, APP-T sogar abgestürzt ist und es wird eine durch die Konfigurierungseinheit SAC-K festgelegte Fehlerbehandlung eingeleitet.

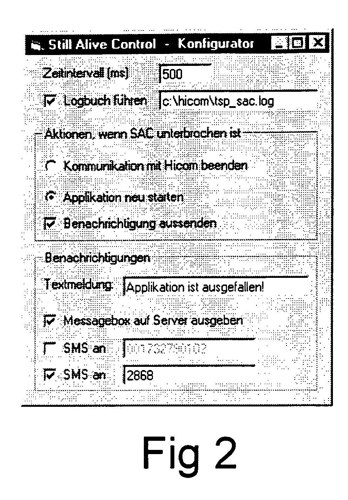

Fig. 2 zeigt ein durch die Konfigurierungseinheit SAC-K an einer Anzeigeeinrichtung, z.B. einem Monitor, der Servereinrichtung SE dargestelltes Windows-Fenster mittels dem eine Konfigurierung der bei einer Fehlfunktion einer Applikation APP-ACD, APP-G, APP-T vorzunehmenden Fehlerbehandlung ermöglicht wird.

Durch die Konfigurierungseinheit SAC-K ist das Zeitintervall für ein Versenden und Empfangen der Aufrechterhaltungsmeldungen SAC durch die Kontrolleinheit SAC-C einstellbar. Im vorliegenden Ausführungsbeispiel ist ein Zeitintervall von 500 ms gewählt. Des weiteren ist einstellbar, ob ein Logbuch geführt werden soll, in dem die Kommunikation für eine nachfolgende Überprüfung, z.B. bei einem aufgetretenen Fehlerfall, gespeichert werden soll. Ist dies der Fall, so kann in einem Verzeichnis der Servereinrichtung SE eine Datei angegeben werden, in der die Kommunikation zwischen der Sicherungseinrichtung TSP und den Applikationen APP-ACD, APP-G, APP-T abgespeichert wird. Im vorliegenden Ausführungsbeispiel erfolgt eine Abspeicherung der Kommunikation in einer Datei 'tsp_sac.log' im Verzeichnis 'c:\hicom\...' der Servereinrichtung SE.

Zusätzlich kann im dargestellten Windows-Fenster eingestellt werden, welche Aktionen durch die Sicherungseinrichtung TSP auszuführen sind, wenn eine Fehlfunktion einer Applikation APP-ACD, APP-G, APP-T aufgetreten ist, d.h. wenn die Übermittlung der Aufrechterhaltungsmeldungen SAC unterbrochen ist. Hierbei ist auswählbar, ob die Verbindung - Kommunikation - zwischen der jeweiligen Applikation APP-ACD, APP-G, APP-T und der Kommunikationsanlage PBX (Hicom) beendet oder ob die jeweilige Applikation APP-ACD, APP-G, APP-T neu gestartet wird. Des weiteren ist eine Benachrichtigungsfunktion aktivierbar bzw. deaktivierbar. In Fällen, in denen einen Beendigung der Kommunikation zwischen der jeweiligen Applikation APP-ACD, APP-G, APP-T und der Kommunikationsanlage PBX vorgesehen ist, können zusätzliche kommunikationsanlagen-spezifische Funktionen aktiviert werden. So wird im vorliegenden Ausführungsbeispiel bei einem Ausfall der in der Servereinrichtung SE ablaufenden Applikation APP-ACD die in der Kommunikationsanlage PBX implementierte Applikation APP-UCD aktiviert und eine Verteilung der an der Kommunikationsanlage PBX ankommenden Rufe durch diese Applikation APP-UCD realisiert. Dies ist insbesondere für Applikationen APP-ACD sinnvoll, deren Ausfall von einem Teilnehmer nicht sofort bemerkt wird.

Bei einer Aktivierung der Benachrichtigungsfunktion ist ein Text - z.B. "Applikation ist ausgefallen!" - eingebbar, der bei einer Benachrichtigung an einen Teilnehmer übermittelt wird. Des weiteren ist die Art der Benachrichtigung einstellbar. So kann ausgewählt werden, daß ein Benachrichtigungsfenster ('Messagebox') an einer Anzeigeeinrichtung, z.B. einem Monitor, der Servereinrichtung SE oder einer Datenverarbeitungseinrichtung DV1,...,DVn angezeigt wird, oder daß eine SMS (Short Message Service) an eine eingebbare Rufnummer übermittelt wird. Im vorliegenden Ausführungsbeispiel wird sowohl ein Benachrichtigungsfenster mit dem Text "Applikation ist ausgefallen!" an einer Anzeigeeinrichtung der betroffenen Servereinrichtung SE bzw. Datenverarbeitungseinrichtung DV1,...,DVn angezeigt als auch eine SMS an das kommunikationsanlagen-interne Endgerät mit der Rufnummer 2868 übermittelt. Auf diese Weise wird ein Teilnehmer unmittelbar über einen Ausfall oder eine Fehlfunktion einer Applikation APP-ACD, APP-G, APP-T informiert, so daß der Teilnehmer eventuell zusätzlich notwendige Maßnahmen ergreifen kann.

## Patentansprüche

1. Verfahren zum Verifizieren einer Verbindung zwischen einer einen Zugriff auf eine Kommunikationseinrichtung (PBX) durchführenden Applikation (APP) und einer den Zugriff steuernden Einrichtung (SE),
bei dem zwischen der Applikation (APP) und der Einrichtung (SE) Aufrechterhaltungsmeldungen (SAC) ausgetauscht werden, und bei dem in Fällen, in denen nach Ablauf einer vorgebbaren Zeitspanne keine Aufrechterhaltungsmeldung (SAC) von der Applikation (APP) und/oder der Einrichtung (SE) empfangen wird, eine Fehlerbehandlung eingeleitet wird.

2. Verfahren nach Anspruch 1,
**dadurch gekennzeichnet,**
**daß** ein Zugriff der Applikation (APP) auf die Kommunikationseinrichtung (PBX) mittels einer TAPI-Schnittstelle (Telephony Application Programming Interface) erfolgt.

3. Verfahren nach Anspruch 1 oder 2,
**dadurch gekennzeichnet,**
**daß** im Rahmen der Fehlerbehandlung durch die Einrichtung (SE) die Verbindung zwischen der Applikation (APP) und der Kommunikationseinrichtung (PBX) beendet und eine kommunikationsanlagen-interne Applikation gestartet wird.

4. Verfahren nach einem der vorhergehenden Ansprüche,
**dadurch gekennzeichnet,**
**daß** durch die Einrichtung (SE) über die Kommunikationseinrichtung (PBX) eine Ausfallmeldung an definierte Kommunikationsendgeräte gesendet werden.

5. Verfahren nach Anspruch 4,
**dadurch gekennzeichnet,**
**daß** die Ausfallmeldung in Form einer SMS (Short Message Service) an ein Mobiltelefon gesendet wird.

6. Verfahren nach Anspruch 4 oder 5,
**dadurch gekennzeichnet,**
**daß** eine Ausfallmeldung auf einer Anzeigeeinrichtung einer Datenverarbeitungseinrichtung (SE, DV1,...,DVn) angezeigt wird, auf der die Applikation (APP) abläuft.

7. Verfahren nach einem der vorhergehenden Ansprüche,
**dadurch gekennzeichnet,**
**daß** durch die Einrichtung (SE) eine Fehlermeldung in ein Logbuch eingetragen wird.

8. Verfahren nach einem der vorhergehenden Ansprüche,
**dadurch gekennzeichnet,**
**daß** durch die Einrichtung (SE) die Applikation (APP) beendet und nachfolgend neu gestartet wird.

9. Anordnung zum Verifizieren einer Verbindung zwischen einer einen Zugriff auf eine Kommunikationseinrichtung (PBX) durchführenden Applikation (APP) und einer den Zugriff steuernden Einrichtung (SE),
mit einer in der Einrichtung (SE) implementierten zentralen Einheit (TSP)
- zum Austauschen von Aufrechterhaltungsmeldungen (SAC) zwischen der Applikation (APP) und der Einrichtung (SE) und
- zum Einleiten einer Fehlerbehandlung in den Fällen, in denen nach Ablauf einer vorgebbaren Zeitspanne keine Aufrechterhaltungsmeldung (SAC) von der Applikation (APP) empfangen wird.

10. Anordnung nach Anspruch 9,
**dadurch gekennzeichnet,**
**daß** die zentrale Einheit (TSP) eine Konfigurierungseinheit (SAC-K) zum Einrichten der vorzunehmenden Fehlerbehandlung aufweist.

11. Anordnung nach Anspruch 9 oder 10,
**dadurch gekennzeichnet,**
**daß** die Applikation (APP) eine TAPI-Applikation (Telephony Application Programming Interface) ist.

12. Anordnung nach Anspruch 11,
**dadurch gekennzeichnet,**
**daß** die Applikation (APP) in einer mit der Einrichtung (SE) über ein lokales Netzwerk (LAN) verbundenen Datenverarbeitungseinrichtung (DV1) implementiert ist.

13. Anordnung nach Anspruch 11,
**dadurch gekennzeichnet,**
**daß** die Applikation (APP) in der Einrichtung (SE) implementiert ist.
